# EUROPEAN PATENT SPECIFICATION

(11) **EP 3 406 864 B1**
(45) Date of publication and mention of the grant of the patent: **07.10.2020**
(21) Application number: 18174113.3
(22) Date of filing: 24.05.2018
(51) Int. Cl.: F01D 25/34, F01D 25/36, F02C 7/268

(54) **BOWED ROTOR MOTORING CONTROL**
BOGENLÄUFERSTEUERUNG
COMMANDE DE MOTORISATION DE ROTOR COURBÉ

(30) Priority: 26.05.2017 US 201715606288
(43) Date of publication of application: 28.11.2018
(73) Proprietor: Hamilton Sundstrand Corporation, Charlotte, NC 28217-4578 (US)
(72) Inventor: GRIGOROV, Boris N., Granby, CT 06035 (US); VEILLEUX Jr., Leo J., Wethersfield, CT 06109 (US)
(74) Representative: Dehns

(56) References cited:
- EP-A1- 2 927 434
- EP-A1- 3 051 074

## Description

### BACKGROUND

The embodiments herein generally relate to engine starting system used to start gas turbine engines and more specifically, a method and apparatus for using the engine starting system for bowed rotor motoring.

Many relatively large gas turbine engines, including turbofan engines, may use an air turbine starter (ATS) to initiate gas turbine engine rotation. The ATS is typically mounted on the accessory gearbox which, in turn, is mounted on the engine or airframe. Consequently, the ATS is installed in the aircraft at all times even though active operation may occur only for a minute or so at the beginning of each flight cycle, along with occasional operation during engine maintenance activities.

The ATS generally includes a turbine section coupled to an output section within a housing. The turbine section is coupled to a high pressure fluid source, such as compressed air, to drive the output section through a gear system. Thus, when the high pressure fluid source impinges upon the turbine section, the output section powers the gas turbine engine.

When the gas turbine engine of an airplane has been shut off for example, after the airplane has landed at an airport, the engine is hot and due to heat rise, the upper portions of the engine will be hotter than lower portions of the engine. When this occurs thermal expansion may cause deflection of components of the engine which can result in a "bowed rotor" condition. If a gas turbine engine is in such a bowed rotor condition, it is undesirable to restart or start the engine. One approach to mitigating a bowed rotor condition is to use the ATS to drive rotation (i.e., cool-down motoring) of a spool within the engine for an extended period of time at a selected speed and is referred to as bowed motor rotoring (BMR). Enhancements to improve the efficiency of BMR are greatly desired.

EP 3051074 relates to a method of starting a gas turbine engine.

### BRIEF DESCRIPTION

According to one embodiment of the claimed invention as in claim 1, a method of motoring a gas turbine engine is provided. The method comprises: determining a first speed to motor a gas turbine engine for cooling; motoring a gas turbine engine at the first speed; detecting a gap parameter of a gas turbine engine; detecting a speed parameter of the gas turbine engine; detecting a vibration parameter of the gas turbine engine; and motoring the gas turbine at a second speed in response to at least one gap parameter, speed parameter, and vibration parameter.

In addition to one or more of the features described above, or as an alternative, further embodiments may include the second speed is greater than the first speed.

In addition to one or more of the features described above, the method according to the claimed invention includes the step: determining a first time period to motor the gas turbine engine at the first speed.

In addition to one or more of the features described above, the method according to the claimed invention includes the step: determining a second time period to motor the gas turbine engine at the second speed.

In addition to one or more of the features described above, or as an alternative, further embodiments may include where the second time period is less than the first time period.

In addition to one or more of the features described above, or as an alternative, further embodiments may include where the engine is motored using an air turbine starter.

In addition to one or more of the features described above, or as an alternative, further embodiments may include regulating airflow to the air turbine starter using a starter air valve.

In addition to one or more of the features described above, or as an alternative, further embodiments may include regulating airflow through the air turbine starter using at least one of a starter air valve and the air turbine starter.

In addition to one or more of the features described above, or as an alternative, further embodiments may include where the engine is motored using an electric starter.

In addition to one or more of the features described above, or as an alternative, further embodiments may include at least one gap clearance sensor detects both the gap parameter and the speed parameter.

According to another embodiment of the claimed invention as in claim 9, an engine starting system is provided. The engine starting system comprising: an engine starter configured to motor a gas turbine engine at a speed; a vibration sensor configured to detect a vibration parameter of the gas turbine engine; one or more feedback sensors configured to detect at least one of a speed parameter and a gap parameter of the gas turbine engine; and a controller configured to determine a speed adjustment to the gas turbine engine in response to at least one speed parameter, gap parameter, and vibration parameter, wherein the controller adjusts the speed of the gas turbine engine by the speed adjustment.

In addition to one or more of the features described above, or as an alternative, further embodiments may include where the speed adjustment increases the speed of the gas turbine engine.

In addition to one or more of the features described above, the system according to the claimed invention includes that the controller is configured to determine a time period to motor the gas turbine engine in response to at least one of the vibration parameter, the gap parameter and the speed parameter.

In addition to one or more of the features described above, or as an alternative, further embodiments may include where the controller determines a time period adjustment in response to a speed adjustment.

In addition to one or more of the features described above, or as an alternative, further embodiments may include where the time period adjustment decreases the time period to motor the gas turbine engine.

In addition to one or more of the features described above, or as an alternative, further embodiments may include where the engine starter includes an air turbine starter.

In addition to one or more of the features described above, or as an alternative, further embodiments may include a starter air valve configured to regulate airflow to the air turbine starter.

In addition to one or more of the features described above, or as an alternative, further embodiments may include a starter air valve, wherein at least one of the starter air valve and the air turbine starter regulates airflow through the air turbine starter.

In addition to one or more of the features described above, or as an alternative, further embodiments may include where the engine starter includes an electric starter.

In addition to one or more of the features described above, or as an alternative, further embodiments may include where the feedback sensors include at least one gap clearance sensor configured to detect both the gap parameter and the speed parameter.

Technical effects of embodiments of the present disclosure include actively monitoring engine parameters of a gas turbine engine during bowed rotor motoring and adjusting the speed of the gas turbine engine accordingly.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft engine starting system, according to an embodiment of the disclosure;
FIG. 2a is a schematic cross-sectional illustration of a gas turbine engine not exhibiting a bowed rotor condition, according to an embodiment of the disclosure;
FIG. 2b is a schematic cross-sectional illustration of a gas turbine engine exhibiting a bowed rotor condition, according to an embodiment of the disclosure;
FIG. 3 is a schematic diagram of an engine starting system, according to an embodiment of the disclosure;
FIG. 4a is a schematic diagram of an engine starting system, according to an embodiment of the disclosure;
FIG. 4b is a schematic diagram of an engine starting system, according to an embodiment of the disclosure;
FIG. 5 is a schematic diagram of an engine starting system, according to an embodiment of the disclosure;
FIG. 6a is a schematic diagram of an engine starting system, according to an embodiment of the disclosure;
FIG. 6b is a schematic diagram of an engine starting system, according to an embodiment of the disclosure;
FIG. 7 is a schematic diagram of an engine starting system, according to an embodiment of the disclosure; and
FIG. 8 is a flow diagram illustrating a method of assembling an air turbine starter, according to an embodiment of the present disclosure.

### DETAILED DESCRIPTION

A detailed description of one or more embodiments of the disclosed apparatus and method are presented herein by way of exemplification and not limitation with reference to the Figures.

Various embodiments of the present disclosure are related to a bowed rotor start mitigation system in a gas turbine engine. Embodiments can include actively monitoring parameters within a gas turbine engine during bowed rotor motoring to increase the effectiveness of bowed rotor motoring and decrease the time for bowed rotor motoring. Conventional bowed rotor motoring typically requires calculations based on the conditions within the gas turbine engine prior to shut down. From the calculations a motoring time at a constant speed is determined. Advantageously by measuring the bow of the rotor in real time during bowed rotor motoring the motoring speed may be increased as the bow dissipates leading to shorter bowed rotor motoring times.

The speed of bow dissipation depends on two variables including motoring speed and duration. The faster the engines is being motored, the more cooling air flows through it, resulting in faster bow dissipation times. The optimum motoring speed is determined based on the amount of bow present and one would like to motor at the fastest speed possible that would not result in engine damage. Engine damage may most likely occur in two ways: blade rub or destructive vibrations. Embodiments disclosed herein include eliminating the possibility of blade rub or destructive vibrations by measuring the amount of bow present, engine speed, and engine vibration throughout the motoring process. The method may also include measuring the amount of bow present and engine vibration just prior to the initiation of motoring or during the onset of motoring to determined initial conditions.

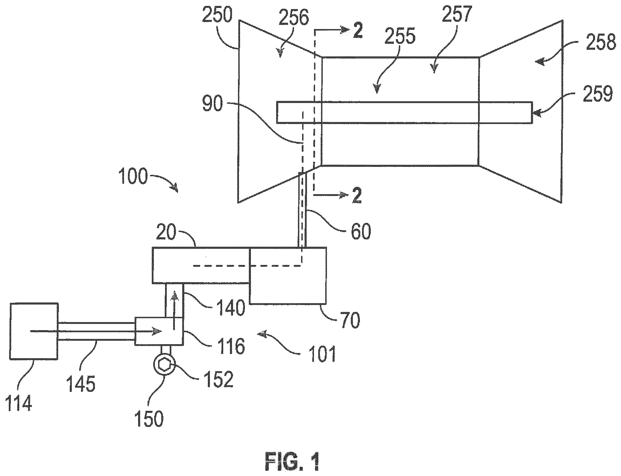

Referring now to the figures, FIG. 1 shows a block diagram of a gas turbine engine 250 and an associated engine starting system 100 according to an embodiment of the present disclosure. The engine starting system 100 includes a valve system 101 in an example however the embodiments disclosed may be utilized with other engine starting system such as, for example an electric motoring system that uses and electric starter (e.g. electric motor) in place of a valve system 101. The valve system 101 includes a starter air valve 116. The valve system 101 is operable to receive a compressed air flow from a compressed air source 114 through one or more ducts 145. The compressed air source 114 can be an auxiliary power unit, a ground cart, or a cross-engine bleed.

An air turbine starter 20 of the engine starting system 100 is operably connected to the gas turbine engine 250 through an accessory gearbox 70 and drive shaft 60 (e.g., a tower shaft), as shown in FIG. 1. As depicted in the example of FIG. 1, the air turbine starter 20 is connected to the gas turbine engine 250 by a drive line 90, which runs from an output of the air turbine starter 20 to the accessory gearbox 70 through the drive shaft 60 to a rotor shaft 259 of the gas turbine engine 250. Operable connections can include gear mesh connections that in some instances can be selectively engaged or disengaged, for instance, through one or more clutches. The air turbine starter 20 is configured to initiate a startup process of the gas turbine engine 250 driving rotation of the rotor shaft 259 of a starting spool 255 of the gas turbine engine 250. The rotor shaft 259 operably connects an engine compressor 256 to an engine turbine 258. Thus, once the engine compressor 256 starts spinning, air is pulled into combustion chamber 257 and mixes with fuel for combustion. Once the air and fuel mixture combusts in the combustion chamber 257, a resulting compressed gas flow drives rotation of the engine turbine 258, which rotates the engine turbine 258 and subsequently the engine compressor 256. Once the startup process has been completed, the air turbine starter 20 can be disengaged from the gas turbine engine 250 to prevent over-speed conditions when the gas turbine engine 250 operates at its normal higher speeds. Although only a single instance of an engine compressor-turbine pair of starting spool 255 is depicted in the example of FIG. 1, it will be understood that embodiments can include any number of spools, such as high/mid/low pressure engine compressor-turbine pairs within the gas turbine engine 250.

The air turbine starter 20 is further operable to drive rotation of the rotor shaft 259 at a lower speed for a longer duration than typically used for engine starting in a motoring mode of operation (also referred to as bowed rotor motoring or cool-down motoring) to prevent/reduce a bowed rotor condition. If a bowed rotor condition has developed, for instance, due to a hot engine shutdown and without taking further immediate action, bowed rotor motoring may be performed by the air turbine starter 20 to reduce a bowed rotor condition by driving rotation of the rotor shaft 259.

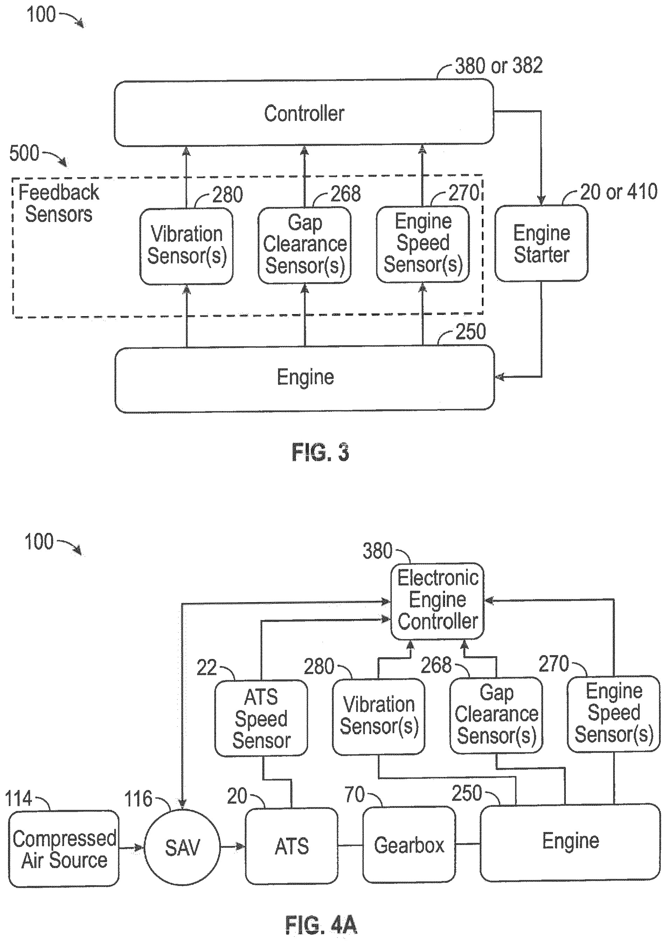

An electronic engine controller 380 (see FIG. 3-7), such as full authority digital engine control (FADEC), typically controls valve operation, for instance, modulation of the starter air valve 116 to control a motoring speed of the gas turbine engine 250 during bowed rotor motoring. Alternative, the engine start system 100 may have a dedicated control, such as, for example a start system controller 382 (see FIGs. 3, 4b, 6a, 6b, and 7). The starter air valve 116 delivers air through a duct 140 to the air turbine starter 20. If the starter air valve 116 fails shut, a corresponding manual override 150 can be used to manually open the starter air valve 116. The manual override 150 can include a tool interface 152 to enable a ground crew to open the starter air valve 116. When starter air valve 116 fails shut and manual override 150 can be used to open the starter air valve 116.

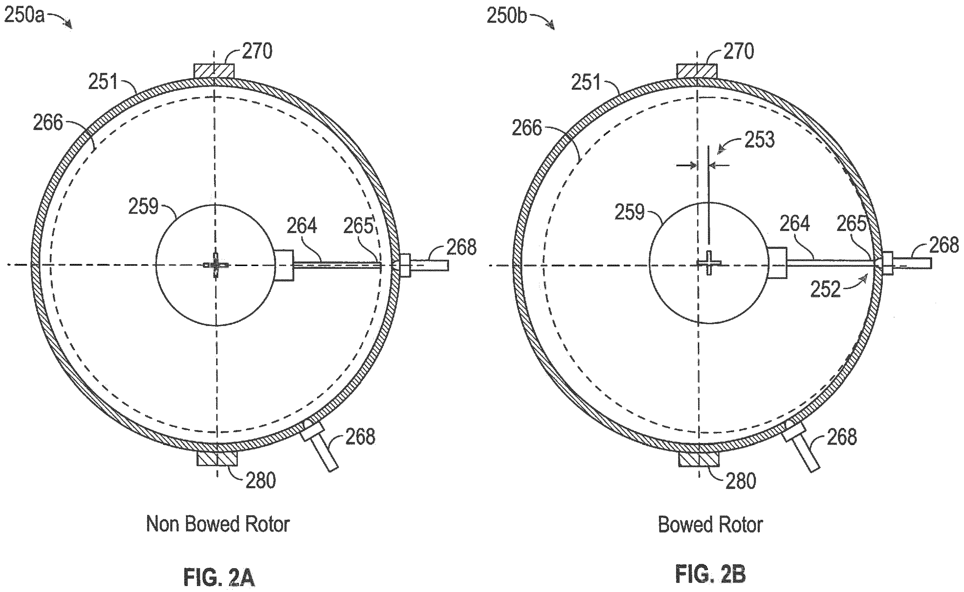

Referring now to FIGs. 2a and 2b with continued referenced to FIG 1. FIG. 2a schematically illustrates a cross-sectional example of a first gas turbine engine 250a not exhibiting a bowed rotor condition and FIG. 2b schematically illustrates a cross-sectional example of a second gas turbine engine 250b exhibiting a bowed rotor condition. The first gas turbine engine 250a and the second gas turbine engine 250b are referred collectively as gas turbine engines 250 when discussing features common to gas turbine engines 250.

As seen in FIG. 2a, when there is no bowed rotor present the rotor shaft 259 rotates around a normal axis of rotation for the engine A. It is understood that while only one blade 264 is shown for ease of illustration, the gas turbine engine 250 may include more than one blade 264. At the outward end of each blade 264, away from the rotor shaft 259 is a blade tip 265. As the blades 264 rotate along with the rotor shaft 259 and the blade tip 265 follows a blade tip trajectory 266, as shown in FIG. 2a. When there is no bowed rotor the blade tip trajectory 266 is about circular and about centered on axis A. When the bowed rotor condition is present, as in FIG. 2b, the bowed rotor condition may cause the rotor shaft 259 to shift off its normal axis of rotation A by a certain amount as indicated at 253. When bowed rotor is present the blade tip trajectory 266 is shifted off center of the axis A and may also appear more oval than circular, as seen in FIG. 2b. The bowed rotor condition may cause the blade 264 to impact an engine case 251, as seen at 252 in FIG. 2b.

As seen in FIGs. 2a and 2b, a gap clearance sensor 268 may be placed circumferentially around the engine case 251 and may monitor a clearance between the blade tip 265 and the engine case 251. The gap clearance sensor may also monitor a clearance between the blade tip 265 and other critical parts of the gas turbine engine 250. It is understood that while two gap clearance sensors 268 are seen in FIGs. 2a and 2b, the gas turbine engine 250 may include more or less gap clearance sensors 268 as required. In an embodiment, more than one gap clearance sensors 268 may be utilized. It is also understood that the location of the gap clearance sensors 268 in FIGs. 2a and 2b may vary. Multiple gap clearance sensors 268 can be located at various angular positions around the engine case 251. The angular positions of the gap clearance sensors 268 may be angular positions around the engine cases 251 determined to be most at risk for clearance based on the design of the gas turbine engine 250. In one example, two gap clearance sensors 268 may be located angularly opposite each other with one gap clearance sensor 268 measuring a maxima gap at a time while the other gap clearance sensor 268 measure minima at the same time.

The gas turbine engine 250 may also include a speed sensor 270 configured to detect the rotational speed of the blade 264 (e.g. speed parameter). In an embodiment, the speed sensor 270 may detect the rotational speed of the rotor shaft 259. It is understood that while a single speed sensor 270 is shown in FIGs. 2a and 2b, the gas turbine engine 250 may include more than one speed sensor 270 as required. It is also understood that the location of the speed sensor 270 may vary from what is shown in FIGs. 2a and 2b. In an embodiment, a single sensor may detect both the speed of the blade 264 and the clearance between the blade tip 265 and the engine case 251. In an embodiment, the gap clearance sensor 268 may measure the speed of the blade 264 and the clearance between the blade tip 265 and the engine case 251 (e.g. gap parameter). In an embodiment, the gap clearance sensor 268 may detect the rotational speed of the rotor shaft 259.

Additionally, the gas turbine engine 250 may also include a vibration sensor 280 configured to detect vibrations of the gas turbine engine (e.g. vibration parameter). It is understood that while a single vibration sensor 280 is shown in FIGs. 2a and 2b, the gas turbine engine 250 may include more than one speed sensor 270 as required. It is also understood that the location of the vibration sensor 280 may vary from what is shown in FIGs. 2a and 2b.

Referring now to FIGs. 3-7 with continued referenced to FIGs. 1-2. FIGs. 3-7 show various schematic diagrams of the engine starting system 100. As seen in FIG. 3, the engine starting system 100 may comprise a gas turbine engine 250, an engine starter 20, 410 in operable communication with the engine 250, a controller 380, 382 in electronic communication with the engine starter 380, and feedback sensors 500 in electronic communication with the electronic engine control 380. The controller 380, 382 may be an electronic engine controller 380 and/or a dedicated start system controller 382. The engine starter may be air turbine starter 20 of a valve system 101 or an electric starter 410.

The feedback sensors 500 may comprise at least one of a vibration sensor 280, a gap clearance sensor 268, and an engine speed sensor 270. Each of the vibration sensor 280, the gap clearance sensor 268, and the engine speed sensor 270 may be in operable communication with the engine 250. Also, each of the vibration sensor 280, the gap clearance sensor 268, and the engine speed sensor 270 are in electronic communication with the controller 380, 382. The vibration sensor 280 collects vibration parameters from the engine 250 and transmits the vibrations parameters to the controller 380, 382. The gap clearance sensor 268 collects gap parameters from the engine 250 and transmits the vibrations parameters to the controller 380, 382. As mentioned above, the gap parameter measures the distance of the blade tips 265 from other engine components, such as, for example the engine case 251. The gap clearance sensor 280 transmits the gap parameters to the controller 380, 382. The speed sensor 270 measures the speed parameters (ex: angular velocity) of the blades 264 as they rotate in the gas turbine engine 250. The speed sensor 270 transmits the speed parameters to the controller 380, 382. The controller 380, 382 controls the operation of the engine starter 20, 410 in response to at least one a gap parameter, vibration parameter, and a speed parameter. For example, if the vibrations parameter show that vibrations are reaching a resonance frequency then the controller 380, 382 may command the engine starter 20, 410 to reduce the speed of the engine 250 to avoid the resonance frequency.

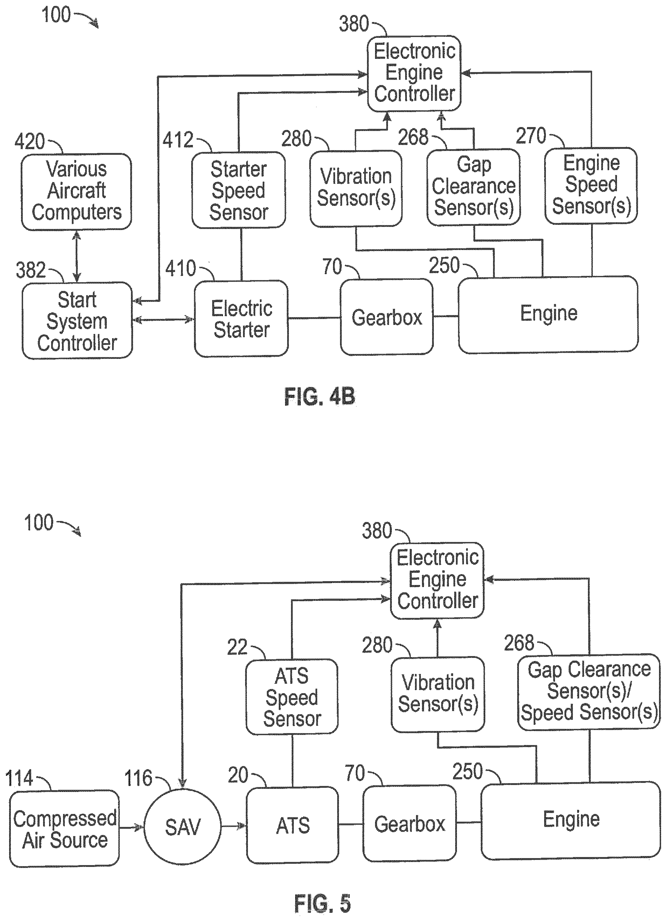

FIG. 4a and 4b illustrate an engine starting system 100 utilizing at least one vibration sensor 280, at least one gap clearance sensor 268, and at least one engine speed sensor 270. In FIG. 4a, the compressed air source 114 provides compressed air to the starter air valve 116, which regulates airflow to the air turbine starter 20. As described above, the compressed air drives the rotation of the air turbine starter 20, which motors the engine 250 through the gear box 70 for bowed rotor motoring. The engine starting system 100 includes an air turbine speed sensor 22 configured to measure air turbine speed parameters of the air turbine starter 20. The air turbine speed parameters depict the speed of the air turbine starter 20. The air turbine speed sensor 22 is in electronic communication with the electronic engine control 380 and transmits the air turbine speed parameters to the electronic engine controller 380. The electronic engine controller 380 is in electronic communication with the starter air valve 116 and may adjust (e.g. pulse width modulate) the starter air valve 116 to regulate the airflow to the air turbine starter 20. The electronic engine controller 380 may adjust the starter air valve 116 in response to at least one of a gap parameter, vibration parameter, speed parameter, and an air turbine speed parameter.

Alternatively, as seen in FIG. 4b, the engine 250 is motored by an electric starter 410, which motors the engine through a gear box 70 using an electric motor (not shown). The electric starter 410 in FIG. 4b replaces the starter air valve 116, the air turbine starter 20, and compressed air source 114 in FIG. 4a. The electric starter 410 may include a starter speed sensor 412 that is in electronic communication with the electronic engine controller 380. The starter speed sensor 412 is configured to measure electric starter speed parameters of the electric starter and transmits the electric starter speed parameters to the electronic engine controller. The electric starter speed parameters depict the speed of the electric starter 410. The electronic engine controller 380 is in electronic communication with the electric starter 410 and adjusts (e.g. speeds up rotation, slows down rotation) the speed of the electric starter 410 to regulate the motoring speed of the engine 250. The engine starting system 100 may also include a start system controller 382 in electronic communication with the electric starter 410, the electronic engine controller 380, and various other aircraft computers 420. The start system controller 382 may controller the engine starting system 100. The start system controller 382 may adjust the electric starter 410 in response to at least one of a gap parameter, vibration parameter, speed parameter, and an electric starter speed parameter.

FIG. 5 is similar to FIG. 4a however there is no dedicated engine speed sensor 270 as there was in FIG. 4a. Instead the gap clearance sensor(s) 268 is configured to monitor both gap parameters and speed parameters.

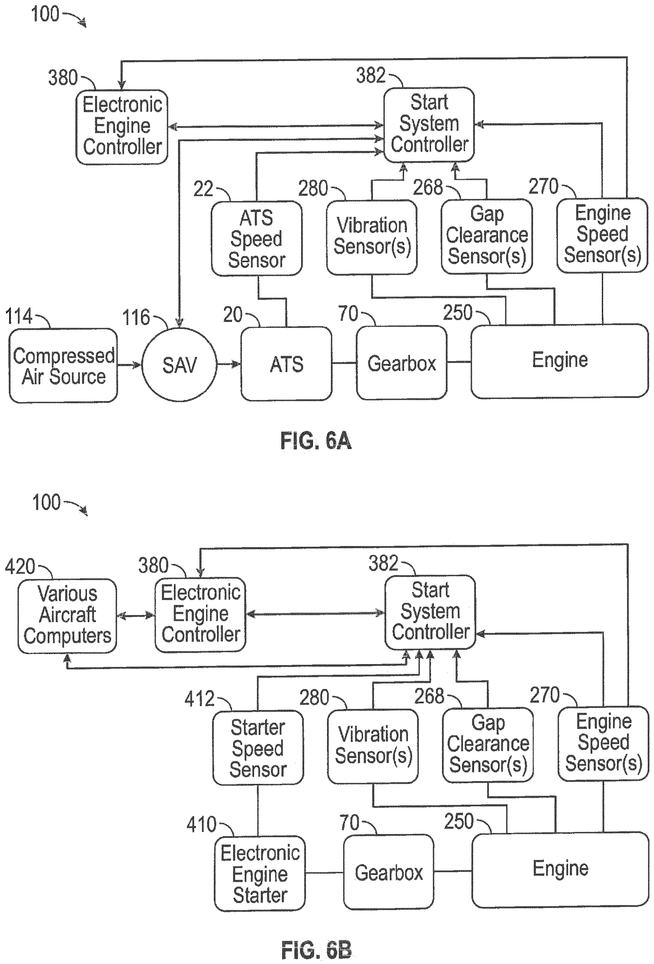

FIGs. 6a and 6b are similar to FIG. 4a and 4b respectively however a dedicated start system controller 382 replaces the electronic engine controller 380. The starter system controller 382 controls the operation of the engine starter system 100 whereas the electronic engine controller 380 controls over all engine 250 operation. The starter system controller 382 is in electronic communication with the electronic engine controller 380. As seen in FIG. 6a, the starter system controller 382 is also in electronic communication with the engine speed sensor 270, the gap clearance sensor 268, the vibration sensor 380, the air turbine speed sensor 22, and the starter air valve 116. The start system controller 382 in FIG. 6a may adjust the starter air valve 116 in response to at least one of a gap parameter, vibration parameter, speed parameter, and an air turbine starter speed parameter. As seen in FIG. 6b, the starter system controller 382 is in electronic communication with the engine speed sensor 270, the gap clearance sensor 268, the vibration sensor 380, the starter speed sensor 412, and the electric engine starter 410. The start system controller 382 in FIG. 6b may adjust the electric starter 410 in response to at least one of a gap parameter, vibration parameter, speed parameter, and an electric engine starter speed parameter.

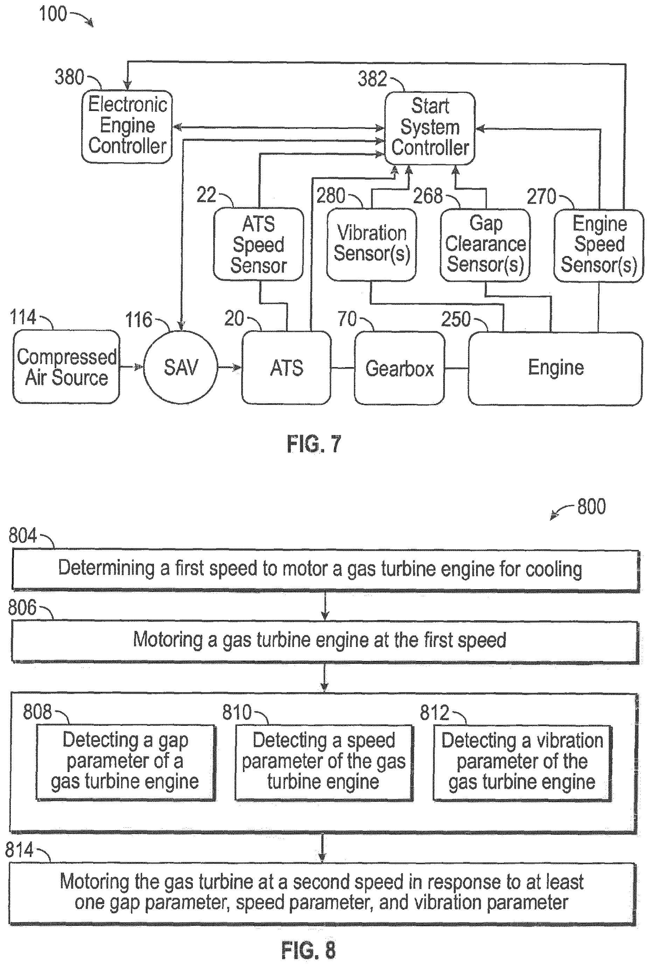

FIG. 7 shows an alternative configuration similar to FIG. 6a however the start system controller 382 is in direct electronic communication with the air turbine starter 20 rather than being in electronic communication with the air turbine starter 20 through the air turbine starter speed sensor 22 as previously shown in FIGs. 4a, 5, and 6a. In the embodiment illustrated in FIG. 7, airflow is also controlled by the air turbine starter 20 in addition to the airflow control provided by the starter air valve 116. Controlling airflow using the air turbine starter 20 and the starter air valve provides additional redundancy to the engine starter system 100. In an example, the air turbine starter 20 baffled exhaust area control may be designed to fail safe open and once detected, the air flow would be controlled by the starter air valve 116, which may adjust its flow area in order to maintain proper motoring speed.

Turning now to FIG. 8 while continuing to reference FIG. 1-7, FIG. 8 shows a flow diagram illustrating a method 800 of motoring a gas turbine engine 250, according to an embodiment of the present disclosure. At block 804, a controller 380, 382 determines a first speed to motor a gas turbine engine 250 for cooling. As mentioned above, the controller may be electronic engine controller 380 and/or a start system controller 382. In an embodiment, the controller 380, 382 may also determine a first time period to motor the gas turbine engine 250 at the first speed. At block 806, the gas turbine engine 250 at the first speed. As mentioned above, the gas turbine engine 250 may be motored by an air turbine starter 20 or an electric starter 410. At block 808, one or more gap clearance sensor 268 detects a gap a parameter of the gas turbine engine 250. At block 810, a speed parameter of the gas turbine engine 250 is detected. As discussed above, the speed parameter may be detected by one or more engine speed sensors 270 or one or more gap clearance sensors 268. At block 812, one or more vibration sensors 280 detect a vibration parameter of the gas turbine engine 250. In an embodiment, the gap parameter, the speed parameter, and the vibration parameter are detected simultaneously, thus blocks 808, 810, and 812 may be performed simultaneously in method 800.

At block 814, the gas turbine engine 250 is motored by an engine starter 20, 410 at a second speed in response to at least one gap parameter, speed parameter, and vibration parameter. In an embodiment, the controller 380, 382 determines the second speed. In another embodiment, the controller 380, 382 also determines a second time period to motor the gas turbine engine 250 the second speed. In another embodiment, the second speed is greater than the first speed. In another embodiment, the second time period is less than the first time period. Advantageously, the controller 380, 382 may increase the motoring speed of the gas turbine engine and decrease the time period for the motoring in response to at least one of the vibration parameter, the gap parameter, and the speed parameter.

While the above description has described the flow process of FIG. 8 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of motoring a gas turbine engine (250), the method comprising:
determining a first speed to motor a gas turbine engine for cooling;
determining a first time period to motor the gas turbine engine at the first speed;
motoring the gas turbine engine at the first speed;
detecting a gap parameter of the gas turbine engine;
detecting a speed parameter of the gas turbine engine;
detecting a vibration parameter of the gas turbine engine;
determining a second speed to motor the gas turbine engine for cooling in response to at least one of the vibration parameter, the gap parameter, and the speed parameter
determining a second time period to motor the gas turbine engine at the second speed in response to at least one of the vibration parameter, the gap parameter, and the speed parameter; and
motoring the gas turbine at the second speed in response to at least one gap parameter, speed parameter, and vibration parameter.

2. The method of claim 1, wherein:
the second speed is greater than the first speed.

3. The method of claim 1, wherein:
the second time period is less than the first time period.

4. The method of any preceding claim, wherein:
the engine is motored using an air turbine starter.

5. The method of claim 4, further comprising:
regulating airflow to the air turbine starter using a starter air valve.

6. The method of claim 4, further comprising:
regulating airflow through the air turbine starter using at least one of a starter air valve and the air turbine starter.

7. The method of any of claims 1-2, wherein:
the engine is motored using an electric starter.

8. The method of any preceding claim, wherein:
at least one gap clearance sensor detects both the gap parameter and the speed parameter.

9. An engine starting system (100) comprising:
an engine starter (20) configured to motor a gas turbine engine (250) at a first speed;
a vibration sensor (280) configured to detect a vibration parameter of the gas turbine engine (250);
one or more feedback sensors (500) configured to detect a speed parameter and a gap parameter of the gas turbine engine; and
a controller (380) configured to determine a speed adjustment to the gas turbine engine in response to at least one speed parameter, gap parameter, and vibration parameter, wherein the controller adjusts the first speed of the gas turbine engine by the speed
adjustment to motor the gas turbine engine at a second speed, and wherein the controller is configured to determine a time period to motor the gas turbine engine at the second speed in response to at least one of the vibration parameter, the gap parameter, and the speed parameter.

10. The engine starting system of claim 9, wherein:
the speed adjustment increases the speed of the gas turbine engine.

11. The engine starting system of claim 9, wherein:
the controller determines a time period adjustment in response to a speed adjustment.

12. The engine starting system of claim 11, wherein:
the time period adjustment decreases the time period to motor the gas turbine engine.

## Patentansprüche

1. Verfahren zum Betreiben eines Gasturbinentriebwerks (250), wobei das Verfahren Folgendes umfasst:
Bestimmen einer ersten Drehzahl zum Betreiben eines Gasturbinentriebwerks zum Kühlen;
Bestimmen eines ersten Zeitraums zum Betreiben des Gasturbinentriebwerks mit der ersten Drehzahl;
Betreiben des Gasturbinentriebwerks mit der ersten Drehzahl;
Erkennen eines Spaltparameters des Gasturbinentriebwerks;
Erkennen eines Drehzahlparameters des Gasturbinentriebwerks;
Erkennen eines Vibrationsparameters des Gasturbinentriebwerks;
Bestimmen einer zweiten Drehzahl zum Betreiben des Gasturbinentriebwerks zum Kühlen als Reaktion auf mindestens einen von dem Vibrationsparameter, dem Spaltparameter und dem Drehzahlparameter;
Bestimmen eines zweiten Zeitraums zum Betreiben des Gasturbinentriebwerks mit der zweiten Drehzahl als Reaktion auf mindestens einen von dem Vibrationsparameter, dem Spaltparameter und dem Drehzahlparameter; und
Betreiben des Gasturbinentriebwerks mit der zweiten Drehzahl als Reaktion auf mindestens einen Spaltparameter, Drehzahlparameter und Vibrationsparameter.

2. Verfahren nach Anspruch 1, wobei:
die zweite Drehzahl größer als die erste Drehzahl ist.

3. Verfahren nach Anspruch 1, wobei:
der zweite Zeitraum geringer als der erste Zeitraum ist.

4. Verfahren nach einem der vorhergehenden Ansprüche, wobei:
das Triebwerk unter Verwendung eines Luftturbinenanlassers betrieben wird.

5. Verfahren nach Anspruch 4, ferner umfassend:
Regulieren des Luftstroms zu dem Luftturbinenanlasser unter Verwendung eines Anlasserluftventils.

6. Verfahren nach Anspruch 4, ferner umfassend:
Regulieren des Luftstroms durch den Luftturbinenanlasser unter Verwendung mindestens eines von einem Anlasserluftventil und dem Luftturbinenanlasser.

7. Verfahren nach einem der Ansprüche 1-2, wobei:
das Triebwerk unter Verwendung eines elektrischen Anlassers betrieben wird.

8. Verfahren nach einem der vorhergehenden Ansprüche, wobei:
mindestens ein Spaltabstandssensor sowohl den Spaltparameter als auch den Drehzahlparameter erkennt.

9. Triebwerkanlassersystem (100), umfassend:
einen Triebwerkanlasser (20), der dazu konfiguriert ist, ein Gasturbinentriebwerk (250) mit einer ersten Drehzahl zu betreiben;
einen Vibrationssensor (280), der dazu konfiguriert ist, einen Vibrationsparameter des Gasturbinentriebwerks (250) zu erkennen;
einen oder mehrere Rückkopplungssensoren (500), die dazu konfiguriert sind, einen Drehzahlparameter und einen Spaltparameter des Gasturbinentriebwerks zu erkennen; und
eine Steuerung (380), die dazu konfiguriert ist, eine Drehzahlanpassung des Gasturbinentriebwerks als Reaktion auf mindestens einen Drehzahlparameter, Spaltparameter und Vibrationsparameter zu bestimmen, wobei die Steuerung die erste Drehzahl des Gasturbinentriebwerks um die Drehzahlanpassung des Gasturbinentriebwerks mit einer zweiten Drehzahl anpasst,
und wobei die Steuerung dazu konfiguriert ist, einen Zeitraum zum Betreiben des Gasturbinentriebwerks mit der zweiten Drehzahl als Reaktion auf mindestens einen von dem Vibrationsparameter, dem Spaltparameter und dem Drehzahlparameter zu betreiben.

10. Triebwerkanlassersystem nach Anspruch 9, wobei:
die Drehzahlanpassung die Drehzahl des Gasturbinentriebwerks erhöht.

11. Triebwerkanlassersystem nach Anspruch 9, wobei:
die Steuerung eine Zeitraumanpassung als Reaktion auf eine Drehzahlanpassung bestimmt.

12. Triebwerkanlassersystem nach Anspruch 11, wobei:
die Zeitraumanpassung den Zeitraum zum Betreiben des Gasturbinentriebwerks verringert.

## Revendications

1. Procédé de motorisation d'un moteur à turbine à gaz (250), le procédé comprenant :
la détermination d'une première vitesse pour faire tourner un moteur à turbine à gaz pour le refroidissement ;
la détermination d'une première période de temps pour faire tourner le moteur à turbine à gaz à la première vitesse ;
la motorisation du moteur à turbine à gaz à la première vitesse ;
la détection d'un paramètre d'espacement du moteur à turbine à gaz ;
la détection d'un paramètre de vitesse du moteur à turbine à gaz ;
la détection d'un paramètre de vibration du moteur à turbine à gaz ;
la détermination d'une seconde vitesse pour faire tourner le moteur à turbine à gaz pour le refroidissement en réponse à au moins l'un du paramètre de vibration, du paramètre d'espacement et du paramètre de vitesse ;
la détermination d'une seconde période de temps pour faire tourner le moteur à turbine à gaz à la seconde vitesse en réponse à au moins l'un du paramètre de vibration, du paramètre d'espacement et du paramètre de vitesse ; et
le fait de faire tourner la turbine à gaz à la seconde vitesse en réponse à au moins un paramètre d'espacement, un paramètre de vitesse et un paramètre de vibration.

2. Procédé selon la revendication 1, dans lequel :
la seconde vitesse est supérieure à la première vitesse.

3. Procédé selon la revendication 1, dans lequel :
la seconde période de temps est inférieure à la première période de temps.

4. Procédé selon une quelconque revendication précédente, dans lequel :
le moteur est motorisé à l'aide d'un démarreur de turbine à air.

5. Procédé selon la revendication 4, comprenant en outre :
la régulation de l'écoulement d'air vers le démarreur de turbine à air à l'aide d'une vanne à air de démarreur.

6. Procédé selon la revendication 4, comprenant en outre :
la régulation de l'écoulement d'air à travers le démarreur de turbine à air à l'aide d'au moins l'un d'une vanne à air de démarreur et du démarreur de turbine à air.

7. Procédé selon l'une quelconque des revendications 1 à 2, dans lequel :
le moteur est motorisé à l'aide d'un démarreur électrique.

8. Procédé selon une quelconque revendication précédente, dans lequel :
au moins un capteur de jeu d'espacement détecte à la fois le paramètre d'espacement et le paramètre de vitesse.

9. Système de démarrage de moteur (100) comprenant :
un démarreur de moteur (20) configuré pour faire tourner un moteur à turbine à gaz (250) à une première vitesse ;
un capteur de vibration (280) configuré pour détecter un paramètre de vibration du moteur à turbine à gaz (250) ;
un ou plusieurs capteurs de rétroaction (500) configurés pour détecter un paramètre de vitesse et un paramètre d'espacement du moteur à turbine à gaz ; et
un dispositif de commande (380) configuré pour déterminer un réglage de vitesse du moteur à turbine à gaz en réponse à au moins un paramètre de vitesse, un paramètre d'espacement et un paramètre de vibration, dans lequel le dispositif de commande règle la première vitesse du moteur à turbine à gaz par le réglage de vitesse pour faire tourner le moteur à turbine à gaz à une seconde vitesse,
et dans lequel le dispositif de commande est configuré pour déterminer une période de temps pour faire tourner le moteur à turbine à gaz à la seconde vitesse en réponse à au moins l'un du paramètre de vibration, du paramètre d'espacement et du paramètre de vitesse.

10. Système de démarrage de moteur selon la revendication 9, dans lequel :
le réglage de vitesse augmente la vitesse du moteur à turbine à gaz.

11. Système de démarrage de moteur selon la revendication 9, dans lequel :
le dispositif de commande détermine un réglage de période de temps en réponse à un réglage de vitesse.

12. Système de démarrage de moteur selon la revendication 11, dans lequel :
le réglage de période de temps diminue la période de temps pour faire tourner le moteur la turbine à gaz.
